# EUROPÄISCHE PATENTSCHRIFT

(11) **EP 3 762 252 B1**
(45) Veröffentlichungstag und Bekanntmachung des Hinweises auf die Patenterteilung: **15.02.2023**
(21) Anmeldenummer: 19708519.4
(22) Anmeldetag: 01.03.2019
(51) Int. Cl.: B60N 2/07, B60N 2/08

(54) **LÄNGSVERSTELLVORRICHTUNG FÜR EINEN FAHRZEUGSITZ MIT EINER BODENSCHIENE, EINER LÄNGSVERSCHIEBBAREN SITZSCHIENE UND EINER ARRETIEREINHEIT**
HORIZONTAL ADJUSTMENT DEVICE FOR A VEHICLE SEAT WITH A FLOOR RAIL, A HORIZONTALLY MOVABLE SEAT RAIL AND A LOCKING UNIT
SYSTEME D'AJUSTEMENT HORIZONTAL POUR UN SIEGE DE VEHICULE EQUIPE D'UN RAIL AU SOL, D'UN RAIL DE SIEGE AJUSTABLE AND D'UNE UNITE DE BLOCAGE

(30) Priorität: 07.03.2018 DE 102018105251
(43) Veröffentlichungstag der Anmeldung: 13.01.2021
(73) Patentinhaber: FISHER DYNAMICS GERMANY GMBH, 42287 Wuppertal (DE)
(72) Erfinder: SPECK, Axel, 25421 Pinneberg (DE)
(74) Vertreter: Patentanwälte Bauer Vorberg Kayser
(86) Internationale Anmeldenummer: PCT/EP2019/055173
(87) Internationale Veröffentlichungsnummer: WO 2019/170547

(56) Entgegenhaltungen:
- WO-A1-2014/135145
- DE-A1- 10 040 593
- DE-A1-102014 217 331
- DE-C2- 10 040 593

## Beschreibung

Die Erfindung bezieht sich auf eine Längsverstellvorrichtung für einen Fahrzeugsitz mit einer Bodenschiene, einer längsverschiebbaren Sitzschiene und einer Arretiereinheit. Eine derartige Verstellvorrichtung ist aus WO 2014/135 145 A1 bekannt.

Bei dieser vorbekannten Vorrichtung greift in der Verriegelungsposition der erste Arm jedes Sperrteils durch das ihm zugeordnete erste Scherfenster der Sitzschiene in ein Loch der ersten Lochleiste. Der gegenüberliegende zweite Arm greift durch das ihm zugeordnete zweite Scherfenster zwischen zwei Raststege einer kammartig ausgebildeten Rastenleiste. Dort ist der Rückhalt des Arms bei einer Belastung in Verschieberichtung schwächer als auf der anderen Seite. Bereits bei Bagatellunfällen, zum Beispiel einer geringen Frontalkollision oder einem entsprechenden Heckaufprall, verformt sich mindestens einer der jeweils belasteten Raststege, während sich eine ähnliche Verformung nicht in den Löchern feststellen lässt. Die Verformung auf beiden Seiten der Lagerachse ist ungleichmäßig. Es kommt dadurch zu einer Belastung der Lagerachse. Sie wird seitlich etwas ausgebogen. Dadurch kann die Schwenkbewegung zumindest eines der Sperrteile um die Achse behindert und eingeschränkt sein.

Für die Funktion der Längsverstellvorrichtung ist es jedoch notwendig, dass jedes einzelne Sperrteil unter der Kraft der jeweiligen Sperrfeder frei und unbehindert in die Verriegelungsposition einfallen kann. Nur wenn die Verriegelungsposition in jedem Einzelfall vollständig erreicht ist, ist die Arretierung sichergestellt. Die Arretierung ist ein entscheidendes Sicherheitsmerkmal.

Bei einem tatsächlichen Crash, worunter im Gegensatz zu einem Bagatellunfall ein Unfall verstanden wird, bei dem Sicherheitselemente, wie beispielsweise Airbags, ansprechen, verformt sich die Lagerachse deutlich stärker. Dann ist eine freie Schwenkbewegung der Sperrteile in der Regel nicht mehr gegeben. Dann ist aber das Fahrzeug auch soweit beschädigt, dass eine erhebliche Reparatur durchgeführt werden muss, zumindest auch die Längsverstellvorrichtung ausgetauscht werden muss. Nach einem Bagatellunfall wird dagegen keine Überprüfung oder gar Reparatur der Längsverstellvorrichtung vorgenommen. Wenn deren Arretiereinheit nur noch eingeschränkt arbeitet, zum Beispiel ein Sperrteil teilweise klemmt, kann es zu folgenschweren Unfällen kommen. Der Kraftfahrzeugsitz ist dann nicht mehr mit der Bodengruppe des Kraftfahrzeugs ausreichend sicher verbunden.

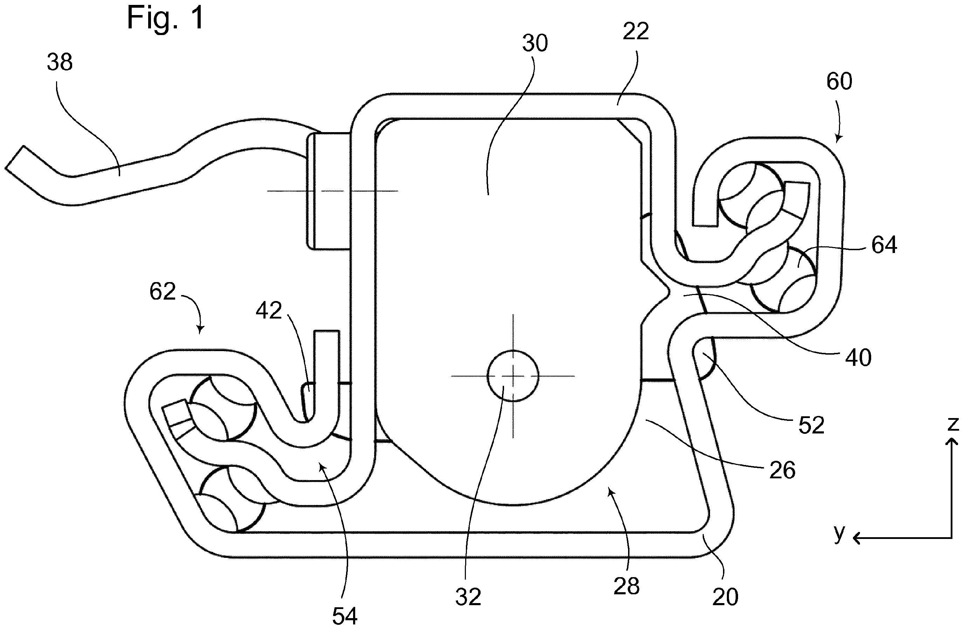

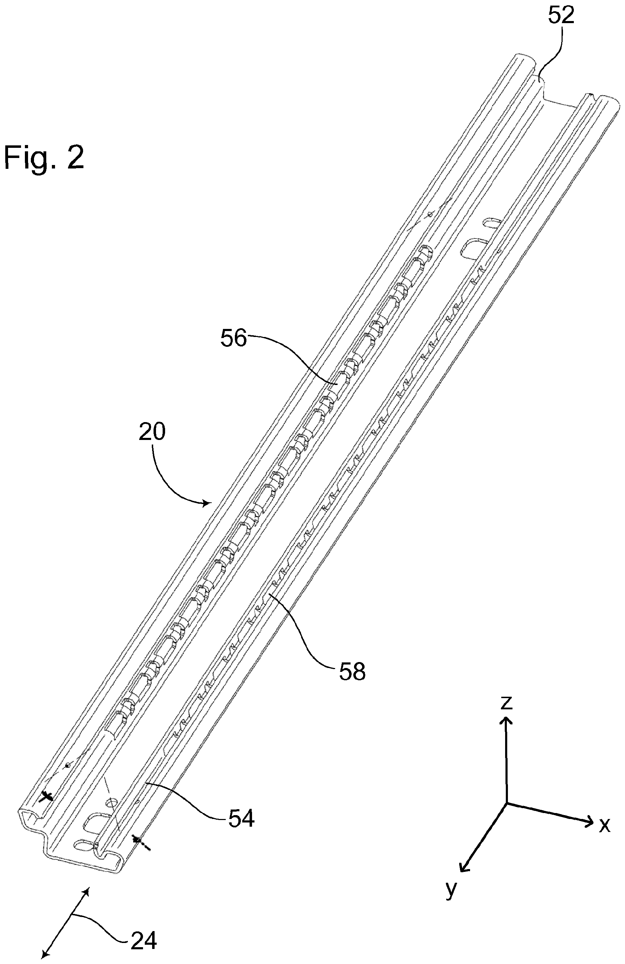

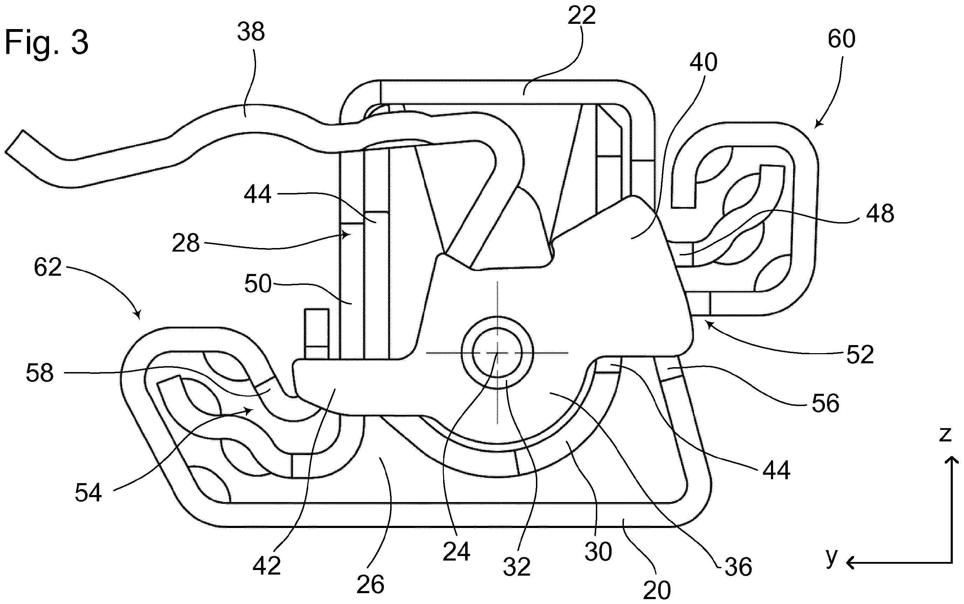

Die DE 27 29 770 C2 zeigt in ihrer Figur 1 eine Arretiereinheit für die Längsverstellung eines Kraftfahrzeugsitzes mit zwei unabhängig voneinander in die Verriegelungsposition, die normalerweise vorliegt, belasteten Sperrteilen. Diese Sperrteile können durch eine Schwenkbewegung einer in Figur 1 nicht dargestellten Lagerwelle gegen die Wirkung von nicht dargestellten Sperrfedern in die Freigabestellung gebracht werden. Um diese Lagerwelle sind die Sperrteile schwenkbar angeordnet, die Lagerwelle erstreckt sich parallel zur Verschieberichtung. In den Figuren 2 und 3 wird eine andere Verriegelungseinrichtung gezeigt, sie hat diesmal keine schwenkbaren Sperrteile, sondern in ihrer Längsrichtung verschiebbare, einzeln von jeweils einer Sperrfeder belastete Sperrstifte. Bei dieser Konstruktion ist die Lagerwelle durch Längsführungen ersetzt. Auf Vorrichtungen mit Sperrstiften dieser Art, also Mehrstiftverriegelungseinrichtungen, bezieht sich die Erfindung nicht.

Aus der DE 10 2008 017 007 A1 ist eine Arretiereinheit für eine Längsverstellung bekannt, deren Sperrteile lediglich einen Arm aufweisen. Hier ist die Belastung der Lagerachse quer zur Verschieberichtung bei jeder Art von Unfall größer als gemäß der WO 2014/135 145 A1, sodass die oben geschilderten Probleme noch deutlicher auftreten.

Aufgabe der Erfindung ist es, die geschilderten Nachteile der vorbekannten Längsverstellvorrichtung zu vermeiden und diese dahingehend weiterzubilden, dass bei einer Belastung eine Querkraft auf die Lagerachse gering bleibt und möglichst ausgeschlossen ist und eine versteckte Beeinträchtigung der Funktion jedes einzelnen Sperrteils möglichst nicht auftritt.

Diese Aufgabe wird gelöst durch eine Längsverstellvorrichtung für einen Fahrzeugsitz mit einer Bodenschiene, mit einer gegenüber dieser in einer Verschieberichtung längsverschiebbaren Sitzschiene und mit einer Arretiereinheit, die mit der Sitzschiene verbunden ist und im Wesentlichen in einem von den beiden Schienen gebildeten Hohlraum untergebracht ist,
wobei die Arretiereinheit ein Gehäuse, eine in diesem Gehäuse angeordnete, in Verschieberichtung verlaufende Lagerachse, mindestens zwei, unabhängig voneinander um die Lagerachse schwenkbar angeordnete, unabhängig voneinander in eine normalerweise vorliegende Verriegelungsposition elastisch durch jeweils eine Sperrfeder vorbelastete, flache Sperrteile, und ein Löseteil, das die Sperrteile gegen die Kraft ihrer Sperrfedern in eine Freigabestellung bewegt, aufweist,
wobei die baugleichen Sperrteile jeweils einen ersten Arm und einen zweiten Arm, zwischen denen sich die Lagerachse befindet, und einen Lösebereich aufweisen, der mit dem Löseteil zusammenwirkt, wobei die Sitzschiene für jedes Sperrteil jeweils ein erstes Scherfenster, das den ersten Arm frei aufnimmt und ein zweites Scherfenster aufweist, das den zweiten Arm frei aufnimmt, und
wobei die Bodenschiene eine mit den ersten Armen zusammenwirkende erste Lochleiste mit in Verschieberichtung periodisch hintereinander angeordneten ersten Sperrfenstern und eine mit den zweiten Armen zusammenwirkende zweite Lochleiste mit in Verschieberichtung periodisch hintereinander angeordneten zweiten Sperrfenstern aufweist.

Da die beiden Arme jedes Sperrteils jeweils in ein Sperrfenster der zugehörigen Lochleiste eingreifen, ist der Rückhalt beider Arme von gleicher Qualität, die Belastung im Unfall ist im Wesentlichen vorzugsweise symmetrisch zur Lagerachse. Dadurch wird eine Querbelastung der Lagerachse und damit deren Verformung, insbesondere die Verformung in y-Richtung, vermieden.

In vorteilhafter Weiterbildung liegt jedem einzelnen ersten Sperrfenster rechtwinklig zur Verschieberichtung ein baugleiches zweites Sperrfenster gegenüber. Dadurch wird ein gleicher Rückhalt auf beiden Seiten der Lagerachse verbessert. Vorzugsweise ist jedem Sperrteil ein erstes und ein zweites Scherfenster in der Sitzschiene zugeordnet. Die Arme befinden sich sowohl in der Verriegelungsposition als auch in der Freigabestellung im jeweiligen Scherfenster. Die Sperrwirkung bei einem Unfall erfolgt in dem vorzugsweise schmalen Spalt zwischen Scherfenster und Sperrfenster. Dadurch können schon mit relativ dünnen Sperrteilen hohe Arretierungskräfte erreicht werden.

Vorzugsweise ist in der Verriegelungsposition derjenige Teilbereich des ersten Arms, der in ein erstes Sperrfenster eingreift, gegenüber dem Teilbereich des zweiten Arms desselben Sperrteils, der in ein zweites Sperrfenster eingreift, bezogen auf die Lagerachse um etwa 180° versetzt. Auch hierdurch werden die Biegekräfte auf die Lagerachse verringert, diese wird nicht quer zur Längsrichtung der Sperrteile, also insbesondere nicht in z-Richtung, ausgebogen.

Vorteilhafterweise ist in der Verriegelungsposition der lichte Abstand zwischen einem ersten Scherfenster und der diesem benachbarten ersten Lochleiste und/oder ist der lichte Abstand zwischen einem zweiten Scherfenster und der diesem benachbarten zweiten Lochleiste kleiner als 10 %, insbesondere kleiner als 5 % der quer zur Verschieberichtung bestimmten größten Abmessung des Sperrteils. Je kleiner der Abstand zwischen Sperrfenster der Lochleiste und Scherfenster ist, umso weniger Material des Sperrteils ist notwendig, um eine unfallbedingte Belastung aufzufangen.

In besonders bevorzugter Weiterbildung befinden sich die erste Lochleiste und/oder die zweite Lochleiste in einem Profilbereich der Bodenschiene, in dem das Profil um mindestens 90° um eine parallel zur Verschieberichtung verlaufende Achse gebogen ist. Aufgrund der Verformung ist die Lochleiste sehr formsteif, sie kann höhere Kräfte aufnehmen als ohne die Biegung. Vorzugsweise sind beide Lochleisten gebogen, möglichst in gleicher Weise, sodass sie eine möglichst gleiche Steifigkeit aufweisen. Einer Verformung der Lochleiste während eines Unfalls wird durch die Ausbiegung entgegengewirkt. Entsprechendes gilt auch für die Scherfenster. Es ist vorteilhaft, wenn das erste Scherfenster und/oder das zweite Scherfenster jedes einzelnen Sperrteils sich in einem Profilbereich der Sitzschiene befindet, in dem das Profil um mindestens 45, insbesondere um mindestens 70° um eine parallel zur Verschieberichtung verlaufende Achse gebogen ist.

Es ist vorteilhaft, wenn beide Profilbereiche der Sitzschiene, in dem sich die Scherfenster befinden, abgebogen sind, möglichst in gleicher Art, insbesondere formgleich. Vorzugsweise sind ebenso die beiden Lochleisten ausgebildet, also in gleicher Art abgebogen und sind zugleich die beiden Profilbereiche der Sitzschiene, in denen sich die Scherfenster befinden, in gleicher Art abgebogen. Vorzugsweise ist die Krümmungsrichtung jeweils gleich. Vorzugsweise bildet der Profilbereich der Sitzschiene eine engere Krümmung, die in kurzem Abstand von der Biegung der Lochleiste übergriffen wird, beides in gleicher Weise auf der ersten und der zweiten Seite. Aufgrund der Biegung der Lochleiste taucht der jeweilige Arm des Sperrteils schon bei geringem Schwenkwinkel erheblich in ein Sperrfenster ein. Dies insbesondere, wenn seine Bewegung auf eine Scheitellinie der Biegung, insbesondere auf den Krümmungsmittelpunkt der Biegung, gerichtet ist. Er bewegt sich dann beim Eingreifen im Wesentlichen quer zum Profil und nicht spitz auf das Profil zu, wie zum Beispiel beim Eingriff zwischen Raststege nach dem Stand der Technik. Dies alles führt zu einer besonders stabilen Arretierung.

Vorzugsweise befinden sich die beiden Scherfenster jedes einzelnen Sperrteils im gleichen Abstand von der Lagerachse, Abweichung plus minus 5 %. Gleiches gilt für die Lochleisten. Es ist vorteilhaft, dass diese außerhalb der Scherfenster liegen. Es ist vorteilhaft, wenn die Arretierverhältnisse für beide Arme eines Sperrteils möglichst gleich sind. Dies wird bei einer symmetrischen Ausbildung der Längsverstellvorrichtung erreicht.

Vorzugsweise haben die beiden Schienen einen ersten Umklammerungsbereich und einen zweiten Umklammerungsbereich, in beiden sind sie wechselseitig ineinander gehakt. Vorzugsweise befinden sich in mindestens einem Umklammerungsbereich Führungsmittel. Vorzugsweise befindet sich die erste Lochleiste in unmittelbarer Nähe des ersten Umklammerungsbereichs und/oder die zweite Lochleiste in unmittelbarer Nähe des zweiten Umklammerungsbereichs. Dabei ist zu bevorzugen, dass der Abstand mindestens einer Lochleiste zu einem nächstliegenden Führungsmittel um mindestens 30 % kleiner ist als ihr Abstand dieser Lochleiste von der Lagerachse.

Für den Fall, dass die beiden Schienen in einem ersten Umklammerungsbereich und in einem zweiten Umklammerungsbereich wechselseitig ineinander gehakt sind, ist es vorteilhaft, wenn sich die ersten Scherfenster in unmittelbarer Nähe des ersten Umklammerungsbereichs und/oder die zweiten Scherfenster in unmittelbarer Nähe des zweiten Umklammerungsbereichs befinden, insbesondere ihr Abstand zu einem Führungsmittel höchstens 30 % ihres Abstands von der Lagerachse beträgt.

In den Umklammerungsbereichen haben die Profile der Schienen eine hohe Stabilität. Diese wird so günstig für die Arretierung herangezogen.

Vorteilhafterweise ist die erste Lochleiste gegenüber der zweiten Lochleiste bezogen auf die Lagerachse um 180° plusminus höchstens 10°, vorzugsweise plusminus höchstens 5° in der x-z Ebene versetzt. Hierdurch wird eine Belastung der Lagerachse quer zur Längsrichtung der Sperrteile, insbesondere in z-Richtung, verringert. Ein entsprechender Vorteil wird erreicht, wenn das erste Scherfenster eines Sperrteils gegenüber dem zweiten Scherfenster dieses Sperrteils bezogen auf die Lagerachse um 180° plusminus höchstens 10°, vorzugsweise 180° plusminus höchstens 5° um die Lagerachse versetzt ist.

Im Folgenden wird ein Ausführungsbeispiel der Erfindung der beschrieben, dies erfolgt unter Bezugnahme auf die Zeichnung. Dieses Ausführungsbeispiel ist nicht einschränkend zu verstehen. Die Figuren der Zeichnung zeigen folgendes:
- Figur 1: eine Stirnansicht der Längsverstellvorrichtung, gesehen in x-Richtung,
- Figur 2: eine perspektivische Darstellung einer Bodenschiene,
- Figur 3: eine Ansicht wie Figur 1, jedoch nun als Schnitt durch die Arretiereinheit,

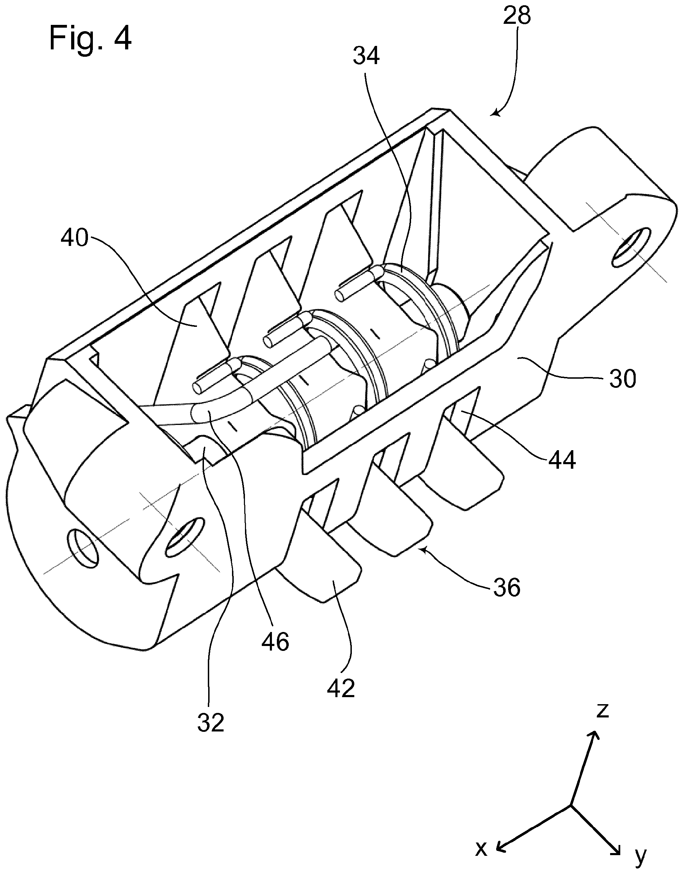

- Figur 4: eine perspektivische Darstellung einer Arretiereinheit, und
- Figur 5: eine Explosionsdarstellung der Arretiereinheit gemäß Figur 4.

Für die Beschreibung wird ein rechtshändiges, orthogonales x-y-z Koordinatensystem verwendet, wie es üblicherweise im Kraftfahrzeugbereich eingesetzt wird. Die positive Richtung der x-Achse zeigt in Fahrtrichtung nach vorn, die y-Achse spannt mit der x-Achse die Fahrebene auf, die positive Richtung der z-Achse zeigt von dieser Fahrebene lotrecht nach oben. In der Regel sind Längsverstellvorrichtungen in einem Fahrzeug leicht schräg, nach vorn ansteigend angeordnet. Die Verschieberichtung, die in der x-z-Ebene liegt, ist gegenüber der x-Richtung um wenige Grade versetzt. Um die Beschreibung zu vereinfachen, wird im Folgenden angenommen, dass die Verschieberichtung in der x-Richtung verläuft.

Die Längsverstellvorrichtung für einen hier nicht dargestellten, aus dem Stand der Technik bekannten Fahrzeugsitz hat eine Bodenschiene 20 und eine Sitzschiene 22. Beide sind relativ zueinander in einer Verschieberichtung 24 verschiebbar, dabei ist die Bodenschiene 20 in der Regel ortsfest, die Sitzschiene 22 ist ihr gegenüber verschiebbar. Die beiden Schienen 20, 22 begrenzen einen nur in x-Richtung offenen Hohlraum 26. In diesem ist eine Arretiereinheit 28 der Längsverstellvorrichtung untergebracht. Sie ist mit der Sitzschiene 22 verbunden, im Ausführungsbeispiel ist sie angeschraubt.

Die Arretiereinheit 28 hat ein Gehäuse 30, eine in diesem Gehäuse 30 angeordnete, in Verschieberichtung 24 verlaufende Lagerachse 32 und drei unabhängig voneinander um die Lagerachse 32 schwenkbar angeordnete, unabhängig voneinander in eine normalerweise vorliegende Verriegelungsposition elastisch durch jeweils eine eigene Sperrfeder 34 vorbelastete, baugleiche, flache Sperrteile 36. Sie sind beispielsweise als Stanzteile ausgeführt. Weiterhin hat sie ein Löseteil 38, das die Sperrteile 36 gemeinsam gegen die Kraft ihrer Sperrfedern 34 in eine Freigabestellung bewegt, die in den Figuren nicht dargestellt ist. In Fig. 1 und 3 ist jeweils die Verriegelungsposition dargestellt.

Das Gehäuse 30 ist lediglich nach oben in z-Richtung offen. Im eingebauten Zustand, siehe Figuren 1 und 3, wird es oben durch eine Basis der Sitzschiene 22 verschlossen. Das Gehäuse 30 ist mit einem von dieser Basis ausgehenden Schenkel der Sitzschiene 22 verbunden und in Kontakt. Von dem gegenüberliegenden Schenkel hat es einen möglichst geringen Abstand. Dieser ist kleiner als die Profilstärke dieses Schenkels. Im Gehäuse 30 ist die Lagerachse 32 fixiert. Innen an diesem Gehäuse 30 stützt sich jeweils ein Ende jeder einzelnen Sperrfeder 34 ab, das andere Ende liegt auf dem zugehörigen Sperrteile 36 auf. Es belastet das jeweilige Sperrteil 36 in positiver x-Richtung gesehen im Uhrzeigersinn.

Jedes Sperrteil 36 hat einen ersten Arm 40 und einen diesem in Bezug auf die Lagerachse 32 etwa 180° gegenüberliegenden zweiten Arm 42. Das Gehäuse 30 hat für jedes Sperrteil 36 zwei gegenüberliegende Durchlässe 44, durch die die Arme 40, 42 frei hindurch ragen.

Im Gehäuse 30 ist eine Feder 46 angeordnet, die wie die Sperrfedern 34 um die Lagerachse 32 angeordnet ist, wie diese als Schenkelfeder ausgeführt ist und wie diese sich mit einer Extremität innen am Gehäuse 30 abstützt. Mit dem anderen Ende liegt sie am Löseteil 38 an.

Jedem Durchlass 44 liegt ein Scherfenster unmittelbar gegenüber. Der erste Arm 40 durchgreift ein erstes Scherfenster 48, der zweite Arm 42 jedes Sperrteils 36 durchgreift ein zweites Scherfenster 50. Die Arme 40, 42 kommen zumindest im Fall einer Belastung der Längsverstellvorrichtung mit den Scherfenstern 48, 50 in Kontakt und stützen sich an dem jeweiligen Scherfenster ab. Die Sitzschiene 22 hat somit eine der Anzahl der Sperrteile 36 entsprechende Anzahl erster Scherfenster 48 eine ebenso große Anzahl zweiter Scherfenster 50.

Die Bodenschiene 20 hat zwei in Verschieberichtung 24 verlaufende Lochleisten, nämlich eine erste Lochleiste 52 und eine zweite Lochleiste 54. Die erste Lochleiste 52 hat in Verschieberichtung 24 periodisch hintereinander angeordnete erste Sperrfenster 56 und die zweite Lochleiste 54 hat entsprechend periodisch hintereinander angeordnete zweite Sperrfenster 58. Die ersten und die zweiten Sperrfenster 56, 58 sind baugleich. Sie befinden sich in stark gekrümmten Bereichen des Profils der Bodenschiene 20. Der Abstand in der y-z Ebene zwischen dem jeweiligen Sperrfenster 56, 58 und dem jeweils zugehörigen Scherfenster 48 bzw. 50 ist möglichst klein, bevorzugt kleiner als die Profilstärke einer Schiene 20 bzw. 22.

Die beiden Schienen 20, 22 sind in einem ersten Umklammerungsbereich 60 und in einem zweiten Umklammerungsbereich 62 wechselseitig ineinander gehakt sind. In jedem Umklammerungsbereich 60 bzw. 62 befinden sich jeweils zwei Reihen von Führungsmitteln 64, siehe Fig. 1. Eines der beiden Scherfenster 48 bzw. 50 jedes Sperrteils 36 weist einen die Verriegelungsposition des Sperrteils 36 bestimmenden Anschlag auf, das andere Scherfenster jedoch nicht.

Im Folgenden wird eine spezielle Lagerung und Montage der Lagerachse 32 im Gehäuse 30 erläutert. Die folgenden Merkmale sind einerseits eine Ergänzung der Lehre, wie sie im Anspruch 1 enthalten ist, andererseits sieht die Anmelderin in der speziellen Lagerung und Montage eine eigene Erfindung und behält sich vor, diese Erfindung in einer separaten Anmeldung weiterzuverfolgen. Ein Hauptanspruch einer derartigen separaten Anmeldung lautet wie folgt:
Längsverstellvorrichtung für einen Fahrzeugsitz mit einer Bodenschiene 20, mit einer gegenüber dieser in einer Verschieberichtung 24 längsverschiebbaren Sitzschiene 22 und mit einer Arretiereinheit 28, die mit der Sitzschiene 22 verbunden ist und im Wesentlichen in einem von den beiden Schienen gebildeten Hohlraum 26 untergebracht ist,
wobei die Arretiereinheit 28 ein Gehäuse 30, eine in diesem Gehäuse 30 angeordnete, in Verschieberichtung 24 verlaufende Lagerachse 32, mindestens zwei, unabhängig voneinander um die Lagerachse 32 schwenkbar angeordnete, unabhängig voneinander in eine normalerweise vorliegende Verriegelungsposition elastisch durch jeweils eine Sperrfeder 34 vorbelastete, flache Sperrteile 36, und ein Löseteil 38, das die Sperrteile 36 gegen die Kraft ihrer Sperrfedern 34 in eine Freigabestellung bewegt, aufweist,
wobei das Gehäuse 32 an mindestens einer quer zur Verschieberichtung befindlichen Wand 66, 74 eine Vertiefung 68 aufweist, die zur Innenseite des Gehäuses 30 offen ist, die sich bis zu einer oberen Kante 70 der Wand 66, 74 erstreckt und in Gegenrichtung (also in negativer z-Richtung) in einem etwa halbkreisförmigen Aufnahmeraum 72 endet, der in seinem Durchmesser dem Außendurchmesser des entsprechenden Endes der Lagerachse 32 angepasst ist und in dem im montierten Zustand sich die Lagerachse 32 befindet,
und wobei die Wand 66, 74 eine zur Innenseite des Gehäuses 30 vorspringende, nachträglich angebrachte Ausprägung 73 aufweist, die den Weg der Lagerachse 32 aus dem Aufnahmeraum 72 blockiert.

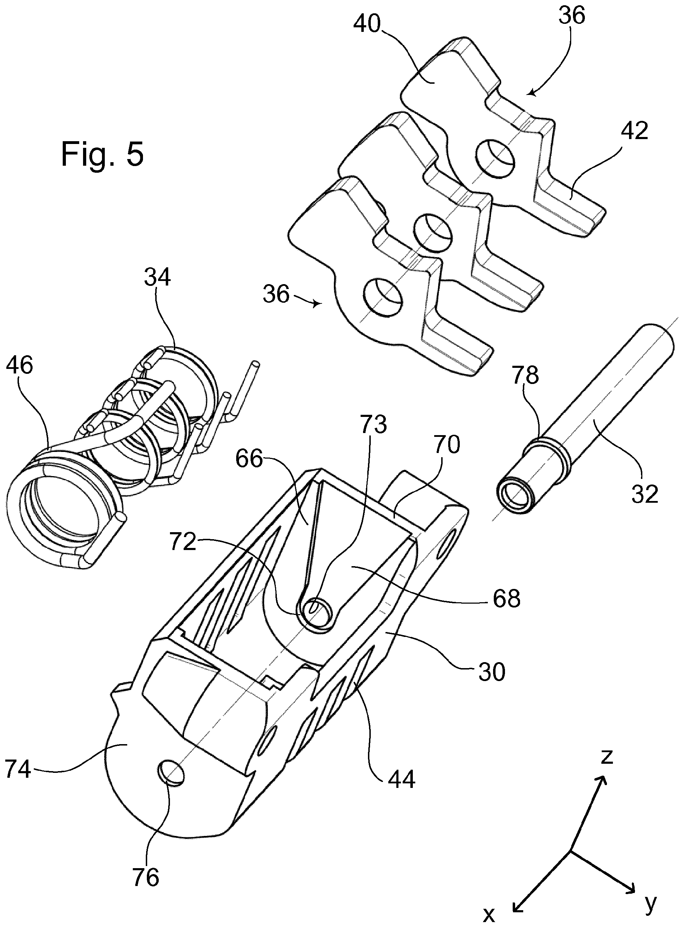

Vorzugsweise haben beide Wände 66, 74 jeweils eine Vertiefung 68. Bei der Montage bewegt sich zumindest ein Ende der Lagerachse ausgehend von der oberen Kante 70 innerhalb der Vertiefung 68, bis es in den Aufnahmeraum 72 kommt. In dieser Position der Lagerachse 32 wird die Ausprägung 73 ausgebildet. Sie befindet sich bei einer hohlen Lagerachse 32 beispielsweise innerhalb des Hohlraums, wie in Figur 5 gezeigt. Sie kann sich aber auch oberhalb des Aufnahmeraums 72, nämlich unmittelbar oberhalb der Lagerachse 32 im Bereich der Vertiefung 68 befinden. Nach Ausbilden der Ausprägung 73 ist die Lagerachse 32 unverlierbar im Gehäuse 30 gehalten.

Alternativ kann eine Wand, z.B. die gegenüberliegende Wand 74, als Aufnahmemittel eine Bohrung 76 aufweisen, die dem dortigen Durchmesser der Lagerachse 32 angepasst ist. Bei der Montage wird die Lagerachse 32 in die Bohrung 76 eingefügt und dort gelagert. Vorteilhafterweise hat die Lagerachse 32 einen Bund 78, der eine axiale Verschiebung der Lagerachse 32 weg von der Vertiefung 68 blockiert. Der Bund 78 ist in Anlage an der Innenseite der gegenüberliegenden Wand 74.

Bei dem Verfahren zur Montage der Lagerachse 32 im Gehäuse 30 wird diese zumindest mit einem Ende, vorzugsweise an beiden Enden, beginnend in Nähe der der oberen Kante 70 in die Vertiefung 68 eingesetzt, von dieser geführt und innerhalb dieser bis in Anlage an den Aufnahmeraum 72 gebracht. Abschließend wird die Ausprägung 73 in der Wand 66 bzw. 74 ausgebildet. Danach ist der Weg der Lagerachse 32 aus dem Aufnahmeraum 72 gesperrt.

Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist.

In den unterschiedlichen Figuren sind hinsichtlich ihrer Funktion gleichwertige Teile stets mit denselben Bezugszeichen versehen, sodass diese in der Regel auch nur einmal beschrieben werden.

### Bezugszeichenliste

- 20: Bodenschiene
- 22: Sitzschiene
- 24: Verschieberichtung
- 26: Hohlraum
- 28: Arretiereinheit
- 30: Gehäuse
- 32: Lagerachse
- 34: Sperrfeder
- 36: Sperrteil
- 38: Löseteil
- 40: erster Arm
- 42: zweiter Arm
- 44: Durchlass
- 46: Feder
- 48: erstes Scherfenster
- 50: zweites Scherfenster
- 52: erste Lochleiste
- 54: zweite Lochleiste
- 56: erstes Sperrfenster
- 58: zweites Sperrfenster
- 60: erster Umklammerungsbereich
- 62: zweiter Umklammerungsbereich
- 64: Führungsmittel
- 66: Wand
- 68: Vertiefung
- 70: obere Kante
- 72: Aufnahmeraum
- 73: Ausprägung
- 74: gegenüberliegende Wand
- 76: Bohrung
- 78: Bund

## Patentansprüche

1. Längsverstellvorrichtung für einen Fahrzeugsitz mit einer Bodenschiene (20), mit einer gegenüber dieser in einer Verschieberichtung (24) längsverschiebbaren Sitzschiene (22) und mit einer Arretiereinheit (28), die mit der Sitzschiene (22) verbunden ist und im Wesentlichen in einem von den beiden Schienen gebildeten Hohlraum (26) untergebracht ist,
wobei die Arretiereinheit (28) ein Gehäuse (30), eine in diesem Gehäuse (30) angeordnete, in Verschieberichtung (24) verlaufende Lagerachse (32), mindestens zwei, unabhängig voneinander um die Lagerachse (32) schwenkbar angeordnete, unabhängig voneinander in eine normalerweise vorliegende Verriegelungsposition elastisch durch jeweils eine Sperrfeder (34) vorbelastete, flache Sperrteile (36), und ein Löseteil (38), das die Sperrteile (36) gegen die Kraft ihrer Sperrfedern (34) in eine Freigabestellung bewegt, aufweist,
wobei die baugleichen Sperrteile (36) jeweils einen ersten Arm (40) und einen zweiten Arm (42), zwischen denen sich die Lagerachse (32) befindet, und einen Lösebereich aufweisen, der mit dem Löseteil (38) zusammenwirkt,
wobei die Sitzschiene (22) für jedes Sperrteil (36) jeweils ein erstes Scherfenster (48), das den ersten Arm (40) aufnimmt und ein zweites Scherfenster (50) aufweist, das den zweiten Arm (42) aufnimmt, und
wobei die Bodenschiene (20) eine mit den ersten Armen (40) zusammenwirkende erste Lochleiste (52) mit in Verschieberichtung (24) periodisch hintereinander angeordneten ersten Sperrfenstern (56) aufweist und ist **dadurch gekennzeichnet, dass** die Bodenschiene eine mit den zweiten Armen (42) zusammenwirkende zweite Lochleiste (54) mit in Verschieberichtung (24) periodisch hintereinander angeordneten zweiten Sperrfenstern (58) aufweist.

2. Längsverstellvorrichtung nach Anspruch 1, **dadurch gekennzeichnet, dass** jedem einzelnen ersten Sperrfenster (56) rechtwinklig zur Verschieberichtung (24) ein baugleiches zweites Sperrfenster (58) gegenüberliegt.

3. Längsverstellvorrichtung nach einem der vorangegangenen Ansprüche, **dadurch gekennzeichnet, dass** die Anzahl der ersten Sperrfenster (56) der Anzahl der zweiten Sperrfenster (58) entspricht.

4. Längsverstellvorrichtung nach einem der vorangegangenen Ansprüche, **dadurch gekennzeichnet, dass** die in Verschieberichtung (24) gemessene Breite eines ersten Sperrfensters (56) gleich ist der Breite des rechtwinklig zur Verschieberichtung (24) gegenüberliegenden zweiten Sperrfensters (58).

5. Längsverstellvorrichtung nach einem der vorangegangenen Ansprüche, **dadurch gekennzeichnet, dass** sich sowohl in der Verriegelungsposition als auch in der Freigabestellung der erste Arm (40) jedes Sperrteils (36) in jeweils einem zugehörigen, ersten Scherfenster und der zweite Arm (42) jedes Sperrteils (36) in jeweils einem zugehörigen, zweiten Scherfenster (50) befindet.

6. Längsverstellvorrichtung nach einem der vorangegangenen Ansprüche, **dadurch gekennzeichnet, dass** in der Verriegelungsposition derjenige Teilbereich des ersten Arms (40), der in ein erstes Sperrfenster (56) eingreift, gegenüber dem Teilbereich des zweiten Arms (42) desselben Sperrteils (36), der in ein zweites Sperrfenster (58) eingreift, bezogen auf die Lagerachse (32) um 180° plusminus höchstens 10°, vorzugsweise im Wesentlichen 180° plusminus höchstens 5° um die Lagerachse (32) versetzt ist.

7. Längsverstellvorrichtung nach einem der vorangegangenen Ansprüche, **dadurch gekennzeichnet, dass** in der Verriegelungsposition der lichte Abstand zwischen einem ersten Scherfenster und einem diesem benachbarten ersten Sperrfenster (56) und/oder der lichte Abstand zwischen einem zweiten Scherfenster (50) und einem diesem benachbarten zweiten Sperrfenster (58) kleiner ist als 10 %, insbesondere kleiner ist als 5 % der quer zur Verschieberichtung (24) bestimmten größten Abmessung des Sperrteils (36).

8. Längsverstellvorrichtung nach einem der vorangegangenen Ansprüche, **dadurch gekennzeichnet, dass** die erste Lochleiste (52) und/oder die zweite Lochleiste (54) sich in einem Profilbereich der Bodenschiene (20) befinden, in dem das Profil um mindestens 90° um eine parallel zur Verschieberichtung (24) verlaufende Achse gebogen ist.

9. Längsverstellvorrichtung nach einem der vorangegangenen Ansprüche, **dadurch gekennzeichnet, dass** das erste Scherfenster und/oder das zweite Scherfenster (48, 50) jedes einzelnen Sperrteils (36) sich in einem Profilbereich der Sitzschiene (22) befindet, in dem das Profil um mindestens 70° um eine parallel zur Verschieberichtung (24) verlaufende Achse gebogen ist.

10. Längsverstellvorrichtung nach einem der vorangegangenen Ansprüche, **dadurch gekennzeichnet, dass** der Schwenkwinkel jedes einzelnen Sperrteils (36) zwischen der Verriegelungsposition und der Freigabestellung im Bereich von 20 bis 28°, vorzugsweise bei 24 plusminus 1° liegt.

11. Längsverstellvorrichtung nach einem der vorangegangenen Ansprüche, **dadurch gekennzeichnet, dass** die beiden Schienen in einem ersten Umklammerungsbereich und in einem zweiten Umklammerungsbereich wechselseitig ineinander gehakt sind, dass sich in jedem Umklammerungsbereich Führungsmittel (64) befinden, und dass sich die erste Lochleiste (52) in unmittelbarer Nähe des ersten Umklammerungsbereichs und/oder die zweite Lochleiste (54) in unmittelbarer Nähe des zweiten Umklammerungsbereichs befindet.

12. Längsverstellvorrichtung nach Anspruch 11, **dadurch gekennzeichnet, dass** der Abstand mindestens einer Lochleiste zu einem nächstliegenden Führungsmittel (64) um mindestens 30 % kleiner ist als ihr Abstand dieser Lochleiste von der Lagerachse (32).

13. Längsverstellvorrichtung nach einem der vorangegangenen Ansprüche, **dadurch gekennzeichnet, dass** die beiden Schienen in einem ersten Umklammerungsbereich und in einem zweiten Umklammerungsbereich wechselseitig ineinander gehakt sind, dass sich in jedem Umklammerungsbereich Führungsmittel (64) befinden, und dass sich die ersten Scherfenster (48) in unmittelbarer Nähe des ersten Umklammerungsbereichs und/oder die zweiten Scherfenster (50) in unmittelbarer Nähe des zweiten Umklammerungsbereichs befinden, insbesondere ihr Abstand zu einem Führungsmittel (64) um mindestens 30 % kleiner ist als ihr Abstand von der Lagerachse (32).

14. Längsverstellvorrichtung nach einem der vorangegangenen Ansprüche, **dadurch gekennzeichnet, dass** eines der beiden Scherfenster (48) jedes Sperrteils (36) einen die Verriegelungsposition des Sperrteils (36) bestimmenden Anschlag aufweist, das andere Scherfenster (50) jedoch nicht.

15. Längsverstellvorrichtung nach einem der vorangegangenen Ansprüche, **dadurch gekennzeichnet, dass** die erste Lochleiste (52) gegenüber der zweiten Lochleiste bezogen auf die Lagerachse (32) um 180° plusminus höchstens 10°, vorzugsweise plusminus höchstens 5° um die Lagerachse (32) versetzt ist.

16. Längsverstellvorrichtung nach einem der vorangegangenen Ansprüche, **dadurch gekennzeichnet, dass** das erste Scherfenster (48) eines Sperrteils (36) gegenüber dem zweiten Scherfenster (50) dieses Sperrteils (36) bezogen auf die Lagerachse (32) um 180° plusminus höchstens 10°, vorzugsweise 180° plusminus höchstens 5° um die Lagerachse (32) versetzt ist.

17. Längsverstellvorrichtung nach einem der vorangegangenen Ansprüche, **dadurch gekennzeichnet, dass** das Gehäuse (32) an mindestens einer quer zur Verschieberichtung befindlichen Wand (66, 74) eine Vertiefung (68) aufweist, die zur Innenseite des Gehäuses (30) offen ist, die sich in negativer z-Richtung von einer oberen Kante (70) der Wand (66, 74) zu einem halbkreisförmigen Aufnahmeraum (72) erstreckt, der in seinem Durchmesser dem Außendurchmesser des entsprechenden Endes der Lagerachse (32) angepasst ist und in dem im montierten Zustand sich die Lagerachse (32) befindet.

18. Längsverstellvorrichtung nach einem der vorangegangenen Ansprüche, **dadurch gekennzeichnet, dass** das Gehäuse (32) an mindestens einer quer zur Verschieberichtung befindlichen Wand (66, 74) eine Ausprägung (73) aufweist, die ein Entfernen der Lagerachse (32) aus ihrem montierten Zustand blockiert.

## Claims

1. A longitudinal adjustment device for a vehicle seat with a floor rail (20), a seat rail (22) longitudinally displaceable with respect thereto in a displacement direction (24), and with a locking unit (28) connected to the seat rail (22) and substantially accommodated in a cavity (26) formed by the two rails,
wherein the locking unit (28) has a housing (30), a bearing shaft (32) arranged in this housing (30) and extending in the displacement direction (24), at least two flat blocking parts (36) which are arranged to be pivotable independently of each other about the bearing shaft (32) and which are elastically biased independently of each other into a normally existing locking position by in each case one blocking spring (34), and a releasing part (38) moving the blocking parts (36) into a releasing position against the force of their blocking springs (34), wherein the structurally identical blocking parts (36) each have a first arm (40) and a second arm (42) between which the bearing shaft (32) is located, and a releasing region cooperating with the releasing part (38),
wherein the seat rail (22) has for each blocking part (36) in each case one first shear slot (48) accommodating the first arm (40) and one second shear slot (50) accommodating the second arm (42), and
wherein the floor rail (20) has a first perforated strip (52) which cooperates with the first arms (40) and which has first blocking slots (56) periodically arranged one behind the other in the displacement direction (24), and is **characterized in that** the floor rail has a second perforated strip (54) which cooperates with the second arms (42) and which has second blocking slots (58) periodically arranged one behind the other in the displacement direction (24).

2. The longitudinal adjustment device according to claim 1, **characterized in that** perpendicular to the displacement direction (24), a structurally identical second blocking slot (58) is located opposite each individual first blocking slot (56).

3. The longitudinal adjustment device according to any one of the preceding claims, **characterized in that** the number of the first blocking slots (56) corresponds to the number of the second blocking slots (58).

4. The longitudinal adjustment device according to any one of the preceding claims, **characterized in that** the width of a first blocking slot (56) measured in the displacement direction (24) is equal to the width of the second blocking slot (58) which, perpendicular to the displacement direction (24), is located opposite thereto.

5. The longitudinal adjustment device according to any one of the preceding claims, **characterized in that** both in the locking position and in the releasing position, the first arm (40) of each blocking part (36) is located in each case in one associated first shear slot, and the second arm (42) of each blocking part (36) is located in each case in one associated second shear slot (50).

6. The longitudinal adjustment device according to any one of the preceding claims, **characterized in that** in the locking position, the partial region of the first arm (40) which engages in a first blocking slot (56), with respect to the bearing shaft (32), is offset relative to the partial region of the second arm (42) of the same blocking part (36) which engages in a second blocking slot (58), by 180° plus/minus maximally 10°, preferably substantially 180° plus/minus maximally 5°, about the bearing shaft (32).

7. The longitudinal adjustment device according to any one of the preceding claims, **characterized in that** in the locking position, the clear distance between a first shear slot and a first blocking slot (56) adjacent thereto and/or the clear distance between a second shear slot (50) and a second blocking slot (58) adjacent thereto is less than 10%, in particular less than 5% of the largest dimension of the blocking part (36) determined transversely to the displacement direction (24).

8. The longitudinal adjustment device according to any one of the preceding claims, **characterized in that** the first perforated strip (52) and/or the second perforated strip (54) are located in a profiled region of the floor rail (20) in which the profile is bent by at least 90° about an axis extending parallel to the displacement direction (24).

9. The longitudinal adjustment device according to any one of the preceding claims, **characterized in that** the first shear slot and/or the second shear slot (48, 50) of each individual blocking part (36) is located in a profiled region of the seat rail (22) in which the profile is bent by at least 70° about an axis extending parallel to the displacement direction (24).

10. The longitudinal adjustment device according to any one of the preceding claims, **characterized in that** the pivot angle of each individual blocking part (36) between the locking position and the releasing position is in the range of from 20 to 28°, is preferably 24 plus/minus 1°.

11. The longitudinal adjustment device according to any one of the preceding claims, **characterized in that** the two rails are mutually hooked into one another in a first clasping region and in a second clasping region, **in that** guide means (64) are located in each clasping region, and **in that** the first perforated strip (52) is located in the immediate vicinity of the first clasping region and/or the second perforated strip (54) is located in the immediate vicinity of the second clasping region.

12. The longitudinal adjustment device according to claim 11, **characterized in that** the distance of at least one perforated strip from a nearest guide means (64) is smaller by at least 30% than the distance of this perforated strip from the bearing shaft (32).

13. The longitudinal adjustment device according to any one of the preceding claims, **characterized in that** the two rails are mutually hooked into one another in a first clasping region and in a second clasping region, **in that** guide means (64) are located in each clasping region, and **in that** the first shear slots (48) are located in the immediate vicinity of the first clasping region and/or the second shear slots (50) are located in the immediate vicinity of the second clasping region, in particular, that their distance from a guide means (64) is smaller by at least 30% than their distance from the bearing shaft (32).

14. The longitudinal adjustment device according to any one of the preceding claims, **characterized in that** one of the two shear slots (48) of each blocking part (36) has a stop determining the locking position of the blocking part (36), but the other shear slot (50) does not have a stop.

15. The longitudinal adjustment device according to any one of the preceding claims, **characterized in that** with respect to the bearing shaft (32), the first perforated strip (52) is offset relative to the second perforated strip by 180° plus/minus maximally 10° about the bearing shaft (32).

16. The longitudinal adjustment device according to any one of the preceding claims, **characterized in that** with respect to the bearing shaft (32), the first shear slot (48) of a blocking part (36) is offset relative to the second shear slot (50) of this blocking part (36) by 180° plus/minus maximally 10°, preferably 180° plus/minus maximally 5°, about the bearing shaft (32).

17. The longitudinal adjustment device according to any one of the preceding claims, **characterized in that** the housing (32), on at least one wall (66, 74) located transversely to the displacement direction, has a depression (68), which is open towards the inside of the housing (30), which extends in the negative z-direction from an upper edge (70) of the wall (66, 74) to a semi-circular accommodating space (72) which, with respect to its diameter, is adapted to the outer diameter of the corresponding end of the bearing shaft (32) and in which the bearing shaft (32) is located in the mounted state.

18. The longitudinal adjustment device according to any one of the preceding claims, **characterized in that** the housing (32), on at least one wall (66, 74) located transversely to the displacement direction, has a stamped protrusion (73) blocking a removal of the bearing shaft (32) from its mounted state.

## Revendications

1. Dispositif de déplacement longitudinal d'un siège de véhicule, pourvu d'un rail de sol (20), pourvu d'un rail de siège (22) susceptible de coulisser en longueur par rapport à celui-ci dans une direction de coulissement (24) et pourvu d'une unité de blocage (28), qui est reliée avec le rail de siège (22) et qui est logée majoritairement dans une cavité (26) formée par les deux rails,
l'unité de blocage (28) comportant un boîtier (30), un axe de support (32) placé dans ledit boîtier 30), s'écoulant dans la direction de coulissement (24), au moins deux pièces de verrouillage (36) plates, placées en étant susceptibles de pivoter indépendamment l'une de l'autre autour de l'axe de support (32), élastiquement précontraintes indépendamment l'une de l'autre dans une position de verrouillage normalement présente par chaque fois un ressort de verrouillage (34), et une pièce de désolidarisation (38), qui déplace les pièces de verrouillage (36) à l'encontre de la force de leurs ressorts de verrouillage (34) dans une position de libération,
les pièces de verrouillage (36) de structure identique comportant chacune un premier bras (40) et un deuxième bras (42), entre lesquels se trouve l'axe de support (32) et une zone de désolidarisation qui coopère avec la pièce de désolidarisation (38),
le rail de siège (22) comportant pour chaque pièce de verrouillage (36) chaque fois une première fenêtre de cisaillement (48), qui reçoit le premier bras (40) et une deuxième fenêtre de cisaillement (50), qui reçoit le deuxième bras (42), et
le rail de sol (20) comportant une première baguette perforée (52) coopérant avec les premiers bras (40), pourvue de premières fenêtres de verrouillage (56), placées périodiquement les unes derrière les autres dans la direction de coulissement (24) et est **caractérisé en ce que** le rail de sol comporte une deuxième baguette perforée (54) coopérant avec les deuxièmes bras (42), pourvue de deuxièmes fenêtres de verrouillage (58), placées périodiquement les unes derrières les autres dans la direction de coulissement (24).

2. Dispositif de déplacement longitudinal selon la revendication 1, **caractérisé en ce qu'**au vis-à-vis de chaque première fenêtre de verrouillage (56) individuelle, à angle droit de la direction de coulissement (24) est placée une deuxième fenêtre de verrouillage (58) de structure identique.

3. Dispositif de déplacement longitudinal selon l'une quelconque des revendications précédentes, **caractérisé en ce que** le nombre des premières fenêtres de verrouillage (56) correspond au nombre des deuxièmes fenêtres de verrouillage (58).

4. Dispositif de déplacement longitudinal selon l'une quelconque des revendications précédentes, **caractérisé en ce que** la largeur mesurée dans la direction de coulissement (24) d'une première fenêtre de verrouillage (56) est égale à la largeur de la deuxième fenêtre de verrouillage (58) située au vis-à-vis, à angle droit de la direction de coulissement (24).

5. Dispositif de déplacement longitudinal selon l'une quelconque des revendications précédentes, **caractérisé en ce qu'**aussi bien dans la position de verrouillage, qu'également dans la position de libération, le premier bras (40) de chaque pièce de verrouillage (36) se trouve dans chaque fois une première fenêtre de cisaillement associée et le deuxième bras (42) de chaque pièce de verrouillage (36) se trouve dans chaque fois une deuxième fenêtre de cisaillement (50) associée.

6. Dispositif de déplacement longitudinal selon l'une quelconque des revendications précédentes, **caractérisé en ce que** dans la position de verrouillage, la zone partielle du premier bras (40) qui s'engage dans une première fenêtre de verrouillage (56) est décalée par rapport à la zone partielle du deuxième bras (42) de la même pièce de verrouillage (36) qui s'engage dans une deuxième fenêtre de verrouillage (58) en rapport à l'axe de support (32) de la valeur de 180°, plus ou moins au maximum 10°, de préférence de la valeur de sensiblement 180°, plus ou moins au maximum 5° autour de l'axe de support (32).

7. Dispositif de déplacement longitudinal selon l'une quelconque des revendications précédentes, **caractérisé en ce que** dans la position de verrouillage, l'écart libre entre une première fenêtre de cisaillement et une première fenêtre de verrouillage (56) voisine de celle-ci et / ou l'écart libre entre une deuxième fenêtre de cisaillement (50) et une deuxième fenêtre de verrouillage (58) voisine de celle-ci est inférieur à 10 %, est notamment inférieur à 5 % de la plus grande dimension de la pièce de verrouillage (36) déterminée à la transversale de la direction de coulissement (24).

8. Dispositif de déplacement longitudinal selon l'une quelconque des revendications précédentes, **caractérisé en ce que** la première baguette perforée (52) et / ou la deuxième baguette perforée (54) se trouvent dans une zone profilée du rail de sol (20), dans laquelle le profilé est recourbé d'au moins 90 ° autour d'un axe s'écoulant à la parallèle de la direction de coulissement (24).

9. Dispositif de déplacement longitudinal selon l'une quelconque des revendications précédentes, **caractérisé en ce que** la première fenêtre de cisaillement et / ou la deuxième fenêtre de cisaillement (48, 50) de chaque pièce de verrouillage (36) individuelle se trouve dans une zone profilée du rail de siège (22), dans laquelle le profilé est recourbé d'au moins 70 ° autour d'un axe s'écoulant à la parallèle de la direction de coulissement (24).

10. Dispositif de déplacement longitudinal selon l'une quelconque des revendications précédentes, **caractérisé en ce que** l'angle de pivotement de chaque pièce de verrouillage (36) individuelle entre la position de verrouillage et la position de libération se situe dans l'ordre de 20 à 28 °, de préférence de 24 ° plus ou moins 1 °.

11. Dispositif de déplacement longitudinal selon l'une quelconque des revendications précédentes, **caractérisé en ce que** dans une première zone d'emprise et dans une deuxième zone d'emprise, les deux rails sont mutuellement accrochés l'un dans l'autre, **en ce que** dans chaque zone d'emprise se trouvent des moyens de guidage (64) et **en ce que** la première baguette perforée (52) se trouve à proximité directe de la première zone d'emprise et / ou **en ce que** la deuxième baguette perforée (54) se trouve à proximité directe de la deuxième zone d'emprise.

12. Dispositif de déplacement longitudinal selon la revendication 11, **caractérisé en ce que** l'écart entre au moins une baguette perforée et un moyen de guidage (64) le plus proche est inférieur d'au moins 30 % à l'écart de ladite baguette perforée par rapport à l'axe de support (32).

13. Dispositif de déplacement longitudinal selon l'une quelconque des revendications précédentes, **caractérisé en ce que** dans une première zone d'emprise et dans une deuxième zone d'emprise, les deux rails sont mutuellement accrochés l'un dans l'autre, **en ce que** dans chaque zone d'emprise se trouvent des moyens de guidage (64), et **en ce que** la première fenêtre de cisaillement (48) se trouve à proximité directe de la première zone d'emprise et / ou **en ce que** la deuxième fenêtre de cisaillement (50) se trouve à proximité directe de la deuxième zone d'emprise, notamment **en ce que** leur écart par rapport à un moyen de guidage (64) est inférieur d'au moins 30 % à leur écart par rapport à leur axe de support (32).

14. Dispositif de déplacement longitudinal selon l'une quelconque des revendications précédentes, **caractérisé en ce que** l'une des deux fenêtres de cisaillement (48) de chaque pièce de verrouillage (36) comporte une butée définissant la position de verrouillage de la pièce de verrouillage (36), mais pas l'autre fenêtre de cisaillement (50).

15. Dispositif de déplacement longitudinal selon l'une quelconque des revendications précédentes, **caractérisé en ce que** la première baguette perforée (52) est décalée par rapport à la deuxième baguette perforée en rapport à l'axe de support (32) de la valeur de 180 ° plus ou moins au maximum 10 °, de préférence, plus ou moins au maximum 5 ° autour de l'axe de support (32).

16. Dispositif de déplacement longitudinal selon l'une quelconque des revendications précédentes, **caractérisé en ce que** la première fenêtre de cisaillement (48) d'une pièce de verrouillage (36) est décalée par rapport à la deuxième fenêtre de cisaillement (50) de ladite pièce de verrouillage (36) en rapport à l'axe de support (32) de la valeur de 180 ° plus ou moins au maximum 10 °, de préférence de la valeur de 180 ° plus ou moins au maximum 5 ° autour de l'axe de support (32).

17. Dispositif de déplacement longitudinal selon l'une quelconque des revendications précédentes, **caractérisé en ce que** sur au moins une paroi (66, 74) se situant à la transversale de la direction de coulissement, le boîtier (32) comporte un renfoncement (68) qui est ouvert vers la face intérieure du boîtier (30), qui s'étend dans la direction négative d'une première arête (70) supérieure de la paroi (66, 74) vers un espace de logement (72) en forme de demi-cercle, qui par son diamètre est adapté au diamètre extérieur de l'extrémité correspondante de l'axe de support (32) et dans lequel se trouve l'axe de support (32) en position montée.

18. Dispositif de déplacement longitudinal selon l'une quelconque des revendications précédentes, **caractérisé en ce que** sur au moins une paroi (66, 74) se situant à la transversale de la direction de coulissement, le boîtier (32) comporte une empreinte (73) qui bloque un retrait de l'axe de support (32) de sa position montée.
